**Europäisches Patentamt**

**European Patent Office**

**Office européen des brevets**

(19)

(11) Publication number: **0 295 227 B1**

# EUROPEAN PATENT SPECIFICATION

(12)

(45) Date of publication of patent specification :
04.03.92 Bulletin 92/10

(51) Int. Cl.⁵ : **H04Q 7/02, H04B 7/26**

(21) Application number : **88850171.5**

(22) Date of filing : **18.05.88**

(54) **Digital time multiplexed mobile telephony system with an effective utilization of every time frame.**

(30) Priority : **11.06.87 SE 8702442**

(43) Date of publication of application :
**14.12.88 Bulletin 88/50**

(45) Publication of the grant of the patent :
**04.03.92 Bulletin 92/10**

(84) Designated Contracting States :
**DE FR GB IT NL**

(56) References cited :
**EP-A- 0 171 525**
**EP-A- 0 186 229**
**US-A- 3 529 243**

(73) Proprietor : **TELEFONAKTIEBOLAGET L M ERICSSON**
**S-126 25 Stockholm (SE)**

(72) Inventor : **Persson, Bengt Yngve**
**Box 42**
**S-182 51 Djursholm (SE)**

## Description

### TECHNICAL FILED

The invention relates to a digital, time multiplexed mobile telephony system including a fixed base station and a plurality of mobile stations. For an established call each mobile station is assigned a channel corresponding to one of a plurality of time slots included in a time frame. A so-called guard time is included in each time frame sent from the base station, for avoiding complete or partial overlapping at the base station receiver of transmissions from the mobile stations.

### BACKGROUND ART

In a digital time multiplex mobile telephony system, a problem occurs due to the varying duration of propagation time between the fixed base station and the different mobile stations. The problem is that the signals from two mobile stations, which transmit during adjacent time slots, can completely or partially overlap each other at the base station receiver.

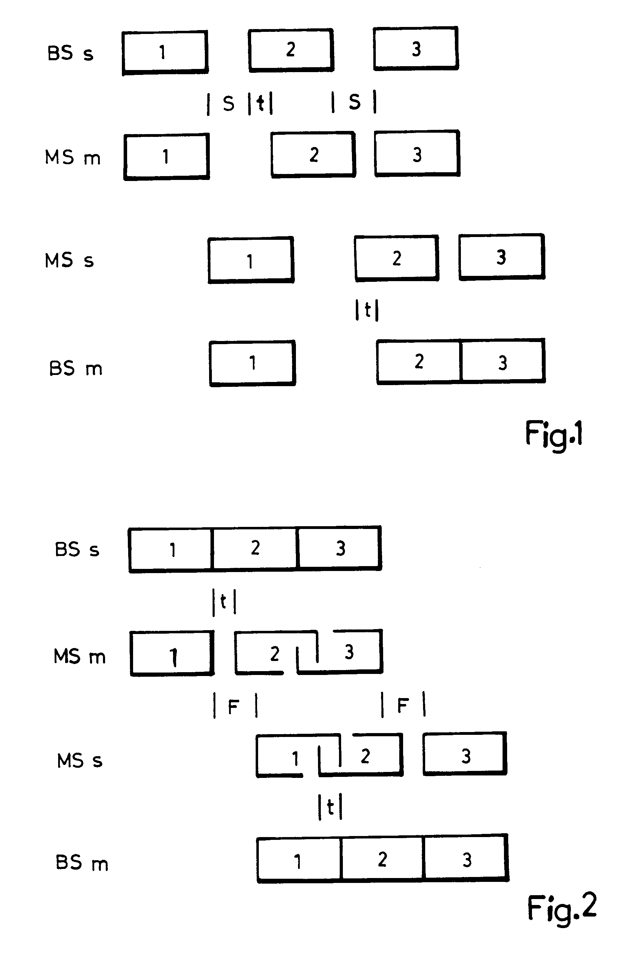

According to a known method, the problem can be avoided by the insertion of a so-called guard time between the transmitted time slots. The duration of the guard time must be at least equal to twice the maximum propagation time between the base station and the mobile stations. The propagation time is dependent on what kind of area the mobile telephony system is intended to serve. In densely populated areas, the so-called traffic areas are smaller, for example, and thus the propagation times are shorter than for sparsely populated areas. However, according to a typical example, about 20% of each time frame must be allocated as guard time. The method is described in more detail in connection with Figure 1.

According to another known method, variable delays between terminated reception and started transmission in the mobile stations are inserted. The delay in each mobile station is dependent on the propagation time in question between it and the base station in such a case. The propagation times must therefore be measured by the base station, which in response thereto controls the delays in the mobile stations. The base station must therefore include means for measuring the propagation times between it and the mobile stations. There must also be special control means in both base station and mobile stations for adjusting the different delays in the mobile stations to the propagation times. The method is described in more detail in connection with Figure 2. A system of this kind is also described in EP 0186 229.

### DISCLOSURE OF INVENTION

The object of the present invention is to provide a time multiplexed mobile telephony system of the kind described in the introduction, where each time frame is utilized effectively, while the necessity of delays between reception and transmission in the mobile stations is avoided. This is achieved by the mobile stations being assigned time slots such that the mobile station nearest the base station is given time slot 1, the next nearest is given time slot 2 and so on. A guard time common to all time slots is inserted after the last time slot, and in a special case this guard time can be equal to one or more time slots.

The characterizing features of the invention are disclosed in the claims.

### BRIEF DESCRIPTION OF DRAWINGS

The invention will now be described in more detail in connection with the drawings, on which Figures 1 and 2 illustrate how the respective time slots are distributed in two mobile telephony systems in the prior art, and Figure 3 illustrates how the time slots are distributed in a mobile telephony system in accordance with the invention.

### BEST MODE FOR CARRYING OUT THE INVENTION

An example of how a guard time is inserted, in a manner described hereinbefore, between the time slots transmitted from the base station is illustrated in Figure 1. In the row BSs, denoting the base station transmission, there are illustrated three successive time slots 1-3, during which a base station transmits to different mobile stations. The time slots are separated in time by a guard time S, which is twice as long as the maximum propagation time between the base station and the mobile stations. The mobile stations, which are assigned the time slots 1 and 3 in this example, are assumed to be so close to the base station that the propagation times are zero, while the propagation time to the mobile station which is assigned the time slot 2 is assumed to be maximum and is denoted by t.

From the row MSm, denoting the mobile station reception, it will be seen that the mobile station which is assigned the time slot 2 receives the base station transmission after a time delay t, while the remaining mobile stations receive the base station transmission without any time delay. From the row MSs, denoting the mobile station transmission, it will be seen that each mobile station starts its transmission immediately after it has terminated its reception. The transmission can also be started after an invariable delay. From the row BSm, denoting base station reception, it will be seen that the termination of the transmission from the mobile station which is assigned the time slot 2 reaches the base station immediately before the start of the transmission from the mobile station which is assigned the time slot 3. This is because the combined propagation time backwards and forwards between the base station and the mobile station assigned the time slot 2 is equal to the guard time S between the time slots.

The method with variable delays between reception and transmission in the mobile stations, mentioned hereinbefore, is exemplified in Figure 2. The same notations are used in the Figure as in Figure 1, and the same conditions with relation to the propagation times as with the example according to Figure 1 are assumed to exist. The transmission during time slot 2 from the base station is thus received after the propagation time t in the mobile station which is assigned this time slot. As will be seen from the row MSs, the mobile stations assigned the time slots 1 and 3 start their transmissions after a time delay F, which is equal to 2t, from the instant receiving has been terminated. On the other hand, the mobile station which has been assigned the time slot 2 starts its transmission without any time delay. As a consequence of this the transmissions from the mobile stations will be received at the base station without any overlapping.

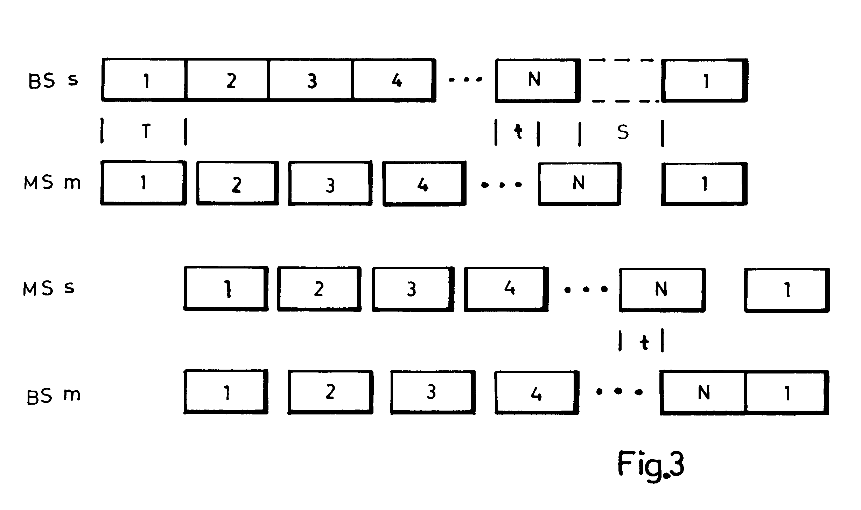

An example of the distribution of the time slots in a mobile telephone system in accordance with the invention is illustrated in Figure 3. Similar denotations as in the previous figures are used in this Figure. The mobile stations are assigned time slots in such a way that the mobile station assigned time slot 1 is the one which for the moment has the shortest propagation time to the base station, i.e. the one which in practice is closest to the base station. The mobile station having the next shortest propagation time is assigned time slot 2, and so on. The last assigned time slot in the time frame is denoted N. After this follows a guard time S common to all time slots. The station assigned time slot 1 is assumed, as previously, to be so close to the base station that the propagation time is equal to zero. The propagation time to the mobile station which has been assigned the time slot N is denoted t and is assumed to be maximum and equal to half the guard time, i.e. S/2.

From the row MSm, mobile station reception, it will be seen that the mobile stations receive the transmissions from the base station with successively increasing delays from zero to t=S/2. In the illustrated example, each mobile station starts its transmission immediately after it has terminated its reception from the base station during the assigned time slot, which is apparent from the row MSs, mobile station transmission. However, it is also conceivable to allow each mobile station to start its transmission after an invariable time delay from the instant it has terminated its reception. In both cases the transmissions from the mobile stations will be received in the base station without overlapping. This applies under the condition that the maximum propagation time t does not exceed half the guard time, i.e. S/2. This is a result of the condition that the combined propagation time backwards and forwards between the base station and the mobile station to which the propagation time is greatest may not exceed the guard time S.

In the proposed telephony system there are, of course, means for assigning channels to the mobile stations. Similar to the system according to Figure 2 means are also included in the base station for measuring the propagation times between it and the mobile stations. In addition, means are included in the mobile telephony system for comparing these times with each other and assigning channels, i.e. time slots, to the mobile stations in response to the comparison results, according to the principle mentioned hereinbefore. In such a case, means for assigning channels are controlled, inter alia, by the means for comparing the propagation times with each other. However, the insertion of variable delays in the mobile stations, with associated control means in both base station and mobile stations is avoided.

Means for comparing the propagation times may be included in the base station or in the mobile station telephone exchange to which the base station is connected. This also applies to the means assigning channels to the mobile stations.

It should be emphasized that several base stations are associated to each service area, these base stations being connected to a single mobile telephone exchange (MTX). However, these base stations utilize different frequencies and all the time slots in a single frame are therefore tied to a single base station.

Should the internal order with relation to the propagation time be changed during established communications, due to the mobile stations moving, a change in channels is carried out with the aid of the means for this purpose already arranged in the mobile telephony system. The channel changes are thus carried out so that the mobile stations to which the propagation time is shortest is once again assigned the time slot 1, the mobile station to which the propagation time is next shortest is assigned the time slot 2, and so on.

## Claims

1. Digital time multiplexed mobile telephony system including a fixed base station, a plurality of mobile stations, and means for assigning channels to the mobile stations, where, for an established connection, each mobile station is assigned a channel corresponding to one of a plurality of time slots included in a time frame, and where each time frame sent from the base station also includes a guard time for avoiding that the transmissions of the mobile stations completely or partially overlap each other at the base station receiver, characterized in that the base station includes means for measuring the propagation times to the mobile stations, in that the mobile telephony system also includes means for comparing the different propagation times with each other, and in that the channels are assigned in such a way that the mobile station to which the propagation time is shortest is assigned the first time slot in each time frame, the mobile station to which the propagation time is next shortest is assigned the second time slot in each time frame, and so on, and that a guard time follows after the last time slot in each time frame.

2. Mobile telephony system as claimed in claim 1, characterized in that said means for comparing the different propagation times with each other is included in the base station.

3. Mobile telephony system as claimed in claim 1, characterized in that said means for comparing the different propagation times with each other is included in a mobile telephone exchange to which the base station is connected.

4. Mobile telephony system as claimed in claims 1-3, characterized in that said means for assigning channels is included in the base station.

5. Mobile telephony system as claimed in claims 1-3, characterized in that said means for assigning channels is included in a mobile telephony exchange to which the base station is connected.

6. Mobile telephony system as claimed in claims 1-5, characterized in that the guard time has the same duration as one or more time slots.

**Patentansprüche**

1. Mobiles, digitales Zeitmultiplex-Telefonsystem mit einer festen Basisstation, einer Vielzahl von mobilen Stationen und einer Einrichtung, um den mobilen Stationen Kanäle zuzuordnen, wobei für eine geschlossene Verbindung, jeder mobilen Station ein Kanal entsprechend einem Zeitschlitz von einer Vielzahl von in einem Zeitrahmen eingeschlossenen Zeitschlitzen zugeordnet ist, und wobei jeder von der Basisstation gesendete Zeitrahmen auch eine Überwachungszeit enthält, um zu vermeiden, daß sich die Übertragungen der mobilen Stationen vollständig oder teilweise an dem Basisstationsempfänger einander überlagern, dadurch **gekennzeichnet**, daß die Basisstation eine Einrichtung zum Messen der Ausbreitungszeiten an die mobilen Stationen enthält, daß das mobile Telefonsystem auch eine Einrichtung zum Vergleichen der verschiedenen Ausbreitungszeiten miteinander enthält, und daß die Kanäle so zugeordnet sind, daß der mobilen Station, zu der die Ausbreitungszeit am kürzesten ist, der erste Schlitz in jedem Zeitrahmen zugeordnet ist, daß der mobilen Station, zu der die Ausbreitungszeit am nächst kürzesten ist, der zweite Zeitschlitz in jedem Zeitrahmen zugeordnet wird und so weiter, und daß in jedem Zeitrahmen eine Überwachungszeit nach dem letzten Zeitschlitz folgt.

2. Mobiles Telefonsystem nach Anspruch 1, dadurch **gekennzeichnet**, daß sich die Einrichtung zum Vergleichen der verschiedenen Ausbreitungszeiten miteinander in der Basisstation befindet.

3. Mobiles Telefonsystem nach Anspruch 1, dadurch **gekennzeichnet**, daß sich die Einrichtung zum Vergleichen der verschiedenen Ausbreitungszeiten miteinander in einer mit der die Basisstation verbundenen mobilen Telefonzweigstelle befindet.

4. Mobiles Telefonsystem nach einem der Ansprüche 1 bis 3, dadurch **gekennzeichnet**, daß sich die Einrichtung zum Zuordnen von Kanälen in der Basisstation befindet.

5. Mobiles Telefonsystem nach einem der Ansprüche 1 bis 3, dadurch **gekennzeichnet**, daß sich die Einrichtung zum Zuordnen von Kanälen in einer mit der Basisstation verbundenen mobilen Telefonzweigstelle befindet.

6. Mobiles Telefonsystem nach einem der Ansprüche 1 bis 5, dadurch **gekennzeichnet**,daß die Überwachungszeit dieselbe Dauer wie eine oder mehrere der Zeitschlitze aufweist.

**Revendications**

1. Système de téléphonie mobile numérique en multiplex temporel comprenant une station de base fixe, un ensemble de stations mobiles, et des moyens pour attribuer des canaux aux stations mobiles, dans lequel, pour une connexion établie, à chaque station mobile est attribué un canal correspondant à un créneau temporel parmi un ensemble de créneaux temporels qui font partie d'une trame temporelle, et dans lequel chaque trame temporelle qui est émise par la station de base contient également un intervalle de temps de garde, pour éviter que les émissions des stations mobiles ne se superposent complètement ou partiellement dans le récepteur de la station de base, caractérisé en ce que la station de base comprend des moyens qui sont destinés à mesurer les durées de propagation vers les stations mobiles, en ce que le système de téléphonie mobile comprend également des moyens qui sont destinés à comparer mutuellement les différentes durées de propagation, et en ce que les canaux sont attribués d'une manière telle que le premier créneau temporel dans chaque trame temporelle soit attribué à la station mobile vers laquelle la durée de propagation est la plus courte, le second créneau temporel dans chaque trame temporelle soit attribué à la station mobile vers laquelle la durée de propagation est immédiatement supérieure, et ainsi de suite, et en ce qu'un intervalle de temps de garde suit le dernier créneau temporel dans chaque trame temporelle.

2. Système de téléphonie mobile selon la revendication 1, caractérisé en ce que les moyens qui sont destinés à comparer mutuellement les différentes durées de propagation sont incorporés dans la station de base.

3. Système de téléphonie mobile selon la revendication 1, caractérisé en ce que les moyens qui sont destinés à comparer mutuellement les différentes durées de propagation sont incorporés dans un centre de commutation téléphonique du service mobile auquel la station de base est connectée.

4. Système de téléphonie mobile selon les revendications 1 à 3, caractérisé en ce que les moyens qui sont destinés à attribuer des canaux sont incorporés dans la station de base.

5. Système de téléphonie mobile selon les revendications 1 à 3, caractérisé en ce que les moyens qui sont destinés à attribuer des canaux sont incorporés dans un centre de commutation téléphonique du service mobile auquel la station de base est connectée.

6. Système de téléphonie mobile selon les revendications 1 à 5, caractérisé en ce que l'intervalle de temps de garde a la même durée qu'un ou plusieurs créneaux temporels.

Fig.1

Fig.2

EP 0 295 227 B1

BS s

| 1 | 2 | 3 | 4 | ··· | N | | 1 |

| T | | t | | S |

MS m

| 1 | 2 | 3 | 4 | ··· | N | 1 |

MS s

| 1 | 2 | 3 | 4 | ··· | N | 1 |

| t |

BS m

| 1 | 2 | 3 | 4 | ··· | N | 1 |

Fig.3